# EUROPEAN PATENT APPLICATION

(11) **EP 4 663 277 A1**
(43) Date of publication of application: **17.12.2025**
(21) Application number: 24753420.9
(22) Date of filing: 08.02.2024
(51) Int. Cl.: B01D 53/14, C07C 211/09, C07C 211/10, C07C 215/08, C07D 243/08, C07D 295/027, C07D 295/13, C07D 487/08

(54) **AMINE COMPOSITION FOR CARBON DIOXIDE SEPARATION AND METHOD FOR PRODUCING SAME**

(30) Priority: 10.02.2023 JP 2023018851; 01.12.2023 JP 2023204267
(71) Applicant: Tosoh Corporation, Yamaguchi 746-8501 (JP)
(72) Inventor: YAMAMOTO Atsushi, Shunan-shi Yamaguchi 746-8501 (JP); HARA Noriyuki, Shunan-shi Yamaguchi 746-8501 (JP); YANASE Manabu, Shunan-shi Yamaguchi 746-8501 (JP)
(74) Representative: Novagraaf International SA
(86) International application number: PCT/JP2024/004316
(87) International publication number: WO 2024/166977

(57) **Abstract**

Piperazine-containing aqueous solutions disclosed in prior art documents have a problem such that the entire solutions are solidified under low temperature conditions at degrees of frost e.g. outdoors in winter. A carbon dioxide separation composition, containing an amine compound (A) represented by the following formula (1) or (2), an amine compound (B) represented by the following formula (3) and carbon dioxide (the amine compound (A) and the amine compound (B) may each independently form a carbonate or a carbamate), is used.

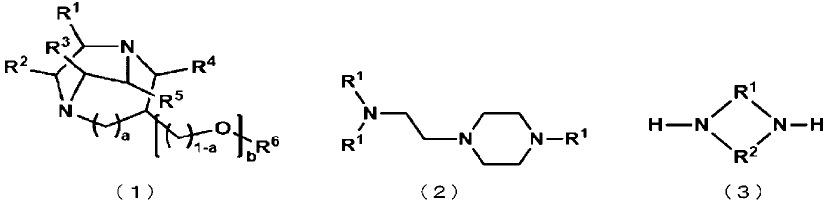

## Description

### TECHNICAL FIELD

The present invention relates to a carbon dioxide separation composition to separate carbon dioxide from a carbon dioxide-containing gas mixture, and a method for producing it.

### BACKGROUND ART

In recent years, to solve global warming problem, separation/recovery of carbon dioxide attracts attention, and thus development of carbon dioxide absorbing solutions has been actively conducted.

As a carbon dioxide absorbing solution, an aqueous monoethanolamine solution is most commonly used. Monoethanolamine is industrially easily available at a low cost, however, it has such a property that it does not desorb carbon dioxide absorbed at low temperature unless heated to high temperature of 120°C or higher.

Accordingly, development of carbon dioxide absorbing solutions having a carbon dioxide desorption temperature lower than monoethanolamine and thus lower energy consumption for carbon dioxide recovery has been conducted. For example, a N-methyldiethanolamine-based absorbing solution has been proposed (for example, Patent Document 1). Further, a carbon dioxide absorbing solution having N-methyldiethanolamine and piperazine as an activating agent dissolved in water is under development (for example, Patent Document 2).

The piperazine-containing cleaning agent as disclosed in Patent Document 2 has a problem such that piperazine precipitates in the vicinity of 5 to 10°C, which impedes pumping of the cleaning agent. As a means to solve the problem, a method for producing an aqueous solution containing piperazine at high concentration, in which the piperazine is stably dissolved without precipitation even in the vicinity of room temperature, has been reported (Patent Document 3).

### PRIOR ART DOCUMENTS

### PATENT DOCUMENTS

Patent Document 1: JP-A-2006-528062
Patent Document 2: JP-A-S52-63171
Patent Document 3: JP-A-2008-56642

### DISCLOSURE OF INVENTION

### TECHNICAL PROBLEM

The piperazine-containing aqueous solutions as disclosed in prior art documents have problems such that the entire solutions are solidified under low temperature conditions at degrees of frost, for example outdoors in winter, and a solution to the problem is desired.

### SOLUTION TO PROBLEM

The present inventors have conducted extensive studies to achieve the above object and as a result accomplished the present invention.

That is, the present invention provides the following [1] to [9].

[1] A carbon dioxide separation composition, containing an amine compound (A) represented by the following formula (1) or (2), an amine compound (B) represented by the following formula (3) and carbon dioxide (the amine compound (A) and the amine compound (B) may each independently form a carbonate or a carbamate), 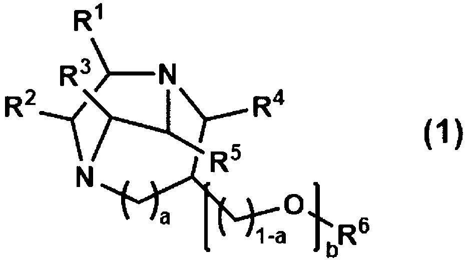
   in the above formula, R¹ to R⁶ are each independently a hydrogen atom or a C₁₋₃ alkyl group, and a and b are each independently 0 or 1; 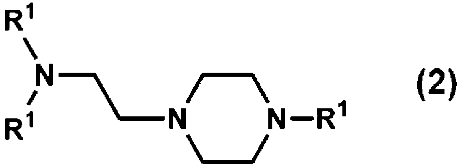
   in the above formula, R¹ are each independently a C₁₋₃ alkyl group; 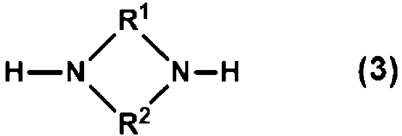
   in the above formula, R¹ and R² are each independently a C₂₋₃ alkylene group.
[2] The carbon dioxide separation composition according to [1], wherein the amine compound (A) is at least one amine compound (A) selected from the group consisting of 1-(2-dimethylaminoethyl)-4-methylpiperazine, 1,4-diazabicyclo[2.2.2]octane-2-methanol and 1,4-diazabicyclo[2.2.2]octane.
[3] The carbon dioxide separation composition according to [1] or [2], wherein the amine compound (B) is piperazine or homopiperazine.
[4] The carbon dioxide separation composition according to any one of [1] to [3], wherein the amount of substance of the carbon dioxide is 10 to 150 parts by amount of substance (parts by mole) per 100 parts by amount of substance (parts by mole) of the total amount of the amine compound (A) and the amine compound (B).
[5] The carbon dioxide separation composition according to any one of [1] to [4], wherein with respect to the composition ratio of the amine compound (B) to the amine compound (A), the ratio of the amine compound (B) is 5 to 1000 parts by mass per 100 parts by mass of the amine compound (A).
[6] The carbon dioxide separation composition according to any one of [1] to [5], which further contains an amine compound (C) represented by the following formula (4) or (5), 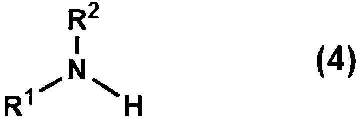
   in the above formula, R¹ and R² are each independently a hydrogen atom, a C₁₋₆ alkyl group, a hydroxymethyl group, a 2-hydroxyethyl group, a 2-hydroxypropyl group, a 2,3-dihydroxypropyl group, a 2,3-dialkoxypropyl group having 5 to 11 carbon atoms in total, a C₂₋₇ aminoalkyl group or a C₄₋₁₀ hydroxyalkyl group, the alkyl group may be a cycloalkyl group that forms a ring; 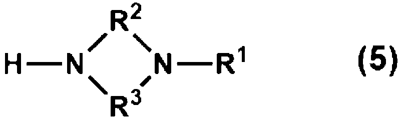
   in the above formula, R¹ is a C₁₋₆ alkyl group, a hydroxymethyl group, a 2-hydroxyethyl group, a 2-hydroxypropyl group, a 2,3-dihydroxypropyl group, a 2,3-dialkoxypropyl group having 5 to 11 carbon atoms in total, a C₂₋₇ aminoalkyl group or a C₄₋₁₀ hydroxyalkyl group, the alkyl group may be a cycloalkyl group that forms a ring, and R² and R³ are each independently a C₂₋₃ alkylene group.
[7] The carbon dioxide separation composition according to [6], wherein
   the amine compound (C) is at least one amine compound (C) selected from the group consisting of 1-(2,3-dihydroxypropyl)-piperazine, N-(2-aminoethyl)piperazine, N-(2-hydroxyethyl)piperazine, N-(2-aminoethyl)-2-aminoethanol, N-methyl-1,3-diaminopropane, N-methylethylenediamine, N-isopropylethylenediamine, monoethanolamine, diethanolamine, 1-(aminoethylamino)-2,3-dihydroxypropane and ethylenediamine.
[8] The carbon dioxide separation composition according to any one of [1] to [7], which further contains water, at a concentration of the water of 30 to 75 mass% to the total amount of the carbon dioxide separation composition containing the water.
[9] A method for producing the carbon dioxide separation composition as defined in [1], which comprises mixing at least the amine compound (A) represented by the following formula (1) or (2), the amine compound (B) represented by the following formula (3), and gaseous, liquid or solid carbon dioxide, 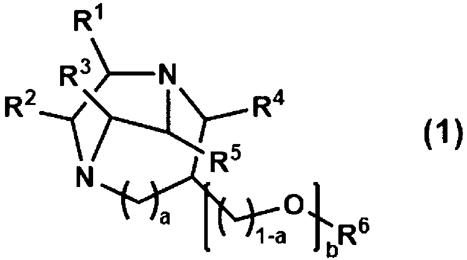
   in the above formula, R¹ to R⁶ are each independently a hydrogen atom or a C₁₋₃ alkyl group, and a and b are each independently 0 or 1; 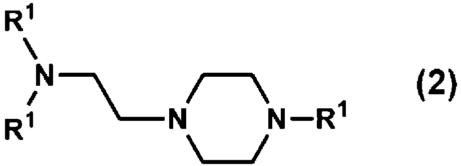
   in the above formula, R¹ are each independently a C₁₋₃ alkyl group; 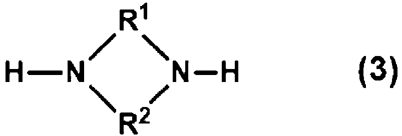 in the above formula, R¹ and R² are each independently a C₂₋₃ alkylene group.

### ADVANTAGEOUS EFFECTS OF INVENTION

The carbon dioxide separation composition of the present invention has a low solidification point as compared with conventional materials and is excellent in liquid state retention and storage stability at degrees of frost, and thus freezing during transport or storage of the carbon dioxide separation composition produced can be avoided.

By avoidance of the freezing, damages such as deformation or breakage of a transport container or a storage container caused by the freezing can be reduced, and thus the present invention is industrially very useful.

### DESCRIPTION OF EMBODIMENTS

Now, the present invention will be described in detail.

As described above, a cyclic secondary amine such as piperazine has low solubility in water, and a conventional carbon dioxide absorbing solution containing it has a problem such that the entire solution is solidified under low temperature conditions such as outdoors in winter, particularly at degrees of frost.

If solidification of the carbon dioxide absorbing solution occurs, it involves a high risk of deforming or breaking the container of the solution during transport or storage. Further, if the carbon dioxide absorbing solution is solidified during transport or storage, the solution should be re-dissolved by heating the entire transport container or storage container when the solution is charged to a carbon dioxide separation/recovery plant, however, such facilities are not so common. Thus, a conventional the carbon dioxide absorbing solution requires strict temperature control for prevention of solidification particularly in winter.

The carbon dioxide separation composition of the present invention has a low solidification point as compared with conventional carbon dioxide absorbing solutions and is excellent in liquid state retention and storage stability at degrees of frost, thus making strict temperature control unnecessary. Thus, the present invention has remarkable effects.

First, the carbon dioxide separation composition of the present invention will be described below.

The carbon dioxide separation composition of the present invention includes an amine compound (A) represented by the following formula (1) or (2), an amine compound (B) represented by the following formula (3) and carbon dioxide (the amine compound (A) and the amine compound (B) may each independently form a carbonate or a carbamate).

The carbon dioxide separation composition of the present invention may further include an amine compound (C) represented by the formula (4) or (5) (the amine compound (C) may form a carbonate or a carbamate).

In the present invention, the amine compounds represented by the above formulae (1), (2), (3), (4) and (5) have a role to absorb and desorb carbon dioxide (for example, WO2021/153650 A1, JP-A-2022-101908 or JP-A-2022-168949). Thus, the carbon dioxide separation composition of the present invention has a function as a carbon dioxide separating/recovering agent.

In the above formula (1), R¹ to R⁶ are each independently a hydrogen atom or a C₁₋₃ alkyl group. a and b are each independently 0 or 1.

a and b are each independently 0 or 1. That is, a+b=0, 1 or 2.

When a=1 and b=1, the above formula (1) is represented by the following formula (1a).

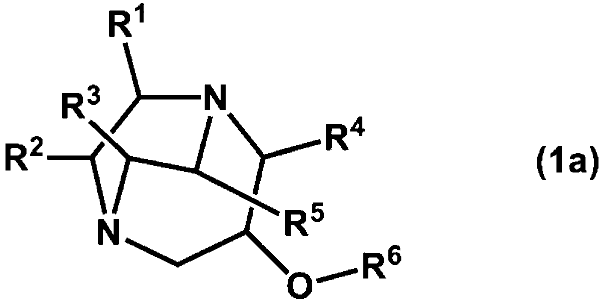

In the above formula, R¹ to R⁶ are each independently a hydrogen atom or a C₁₋₃ alkyl group.

When a=0 and b=1, the above formula (1) is represented by the following formula (1b).

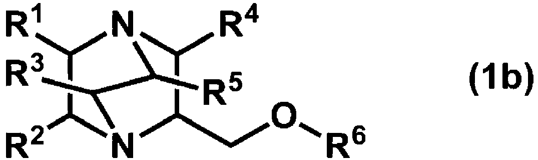

In the above formula, R¹ to R⁶ are each independently a hydrogen atom or a C₁₋₃ alkyl group.

When a=0 and b=0, the above formula (1) is represented by the following formula (1c).

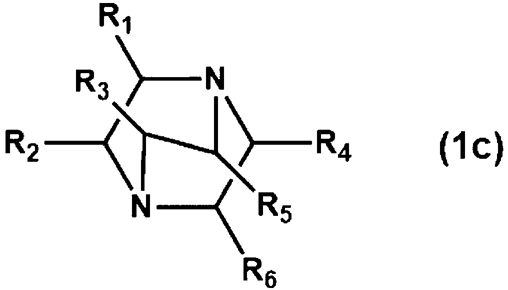

in the above formula, R¹ to R⁶ are each independently a hydrogen atom or a C₁₋₃ alkyl group.

The amine compound represented by the above formula (1) is, in view of excellence in suppression of solidification, preferably such that a=0 and b=1, or a=0 and b=0. That is, it is preferably the amine compound represented by the formula (1b) or (1c).

In the above formula (1), (1a), (1b) and (1c), R¹ to R⁶ are not particularly limited so long as they satisfy the above definitions, and for example, they may be each independently a hydrogen atom, a methyl group, an ethyl group, a n-propyl group or an isopropyl group. Among them, in view of excellence in suppression of solidification, R¹ to R⁶ are preferably each independently a hydrogen atom, a methyl group or an ethyl group, more preferably they are all hydrogen atoms.

Specific examples of the amine compound represented by the formula (1) include the following compounds (exemplified compounds 1 to 23), but not limited to thereto.

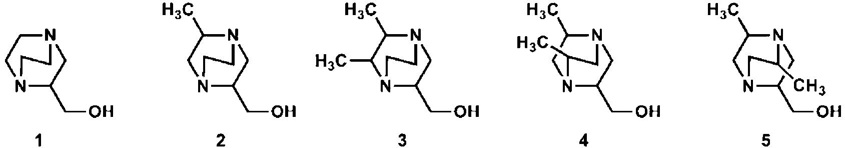

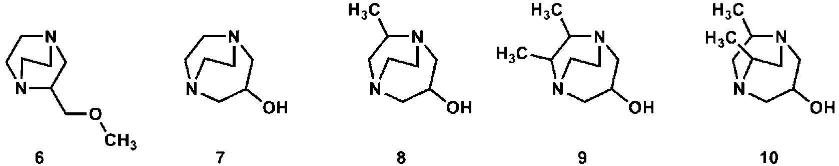

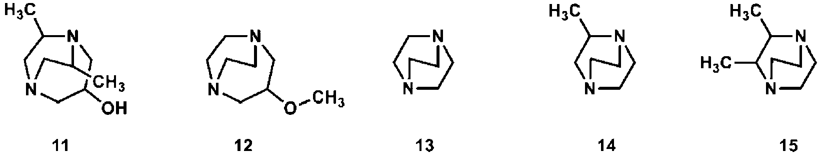

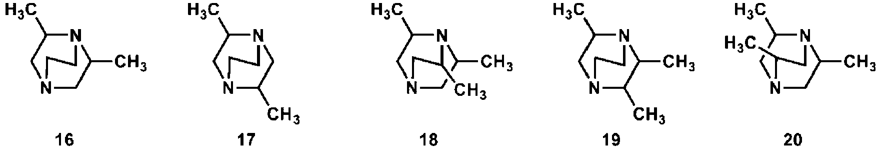

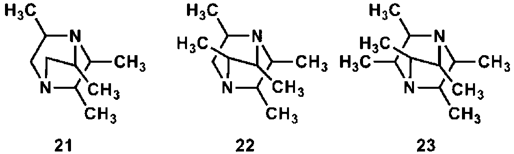

The amine compound represented by the above formula (1) is, in view of excellence in suppression of solidification, preferably 1,4-diazabicyclo[2.2.2]octane-2-methanol (R¹=R²=R³=R⁴=R⁵=R⁶= hydrogen atom, a=0, b=1) or 1,4-diazabicyclo[2.2.2]octane (R¹=R²=R³=R⁴=R⁵=R⁶= hydrogen atom, a=0, b=0). That is, preferred are amine compounds of the following exemplified compounds 1 and 13.

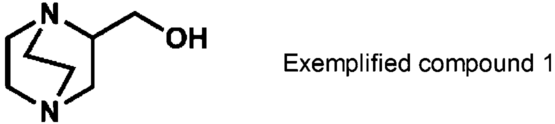

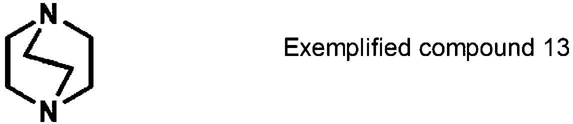

In the above formula (2), R¹ are each independently a C₁₋₃ alkyl group.

In the above formula (2), R¹ are not particularly limited so long as they satisfy the above definitions and may, for example, be each independently a methyl group, an ethyl group, a n-propyl group or an isopropyl group. Among them, in view of excellence in suppression of solidification, it is preferred that R¹ are all methyl groups.

Specific examples of the amine compound represented by the above formula (2) include 1-(2-dimethylaminoethyl)-4-methylpiperazine.

The amine compound (A) is, in view of excellence in suppression of solidification, preferably at least one amine compound (A) selected from the group consisting of 1-(2-dimethylaminoethyl)-4-methylpiperazine, 1,4-diazabicyclo[2.2.2]octane-2-methanol and 1,4-diazabicyclo[2.2.2]octane.

In the above formula (3), R¹ and R² are each independently a C₂₋₃ alkylene group.

In the above formula (3), R¹ and R² are not particularly limited so long as they satisfy the above definitions and may, for example, be each independently an ethylene group or a propylene group. R¹ and R² are, in view of excellence in suppression of solidification, preferably each independently a 1,2-ethylene group, a 1,2-propylene group or a 1,3-propylene group, and it is more preferred that R¹ and R² are identical groups of 1,2-ethylene groups, 1,2-propylene groups or 1,3-propylene groups, and further preferred that they are identical groups of 1,2-ethylene groups.

Specific examples of the amine compound (B) represented by the above formula (3) include piperazine and homopiperazine.

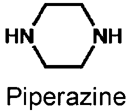

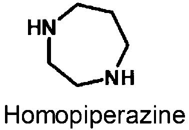

The amine compound (B) is, in view of excellence in suppression of solidification, preferably piperazine or homopiperazine.

In the above formula (4), R¹ and R² are each independently a hydrogen atom, a C₁₋₆ alkyl group, a hydroxymethyl group, a 2-hydroxyethyl group, a 2-hydroxypropyl group, a 2,3-dihydroxypropyl group, a 2,3-dialkoxypropyl group having 5 to 11 carbon atoms in total, a C₂₋₇ aminoalkyl group or a C₄₋₁₀ hydroxyalkyl group. The alkyl group may be a cycloalkyl group that forms a ring.

In the above formula (5), R¹ is a C₁₋₆ alkyl group, a hydroxymethyl group, a 2-hydroxyethyl group, a 2-hydroxypropyl group, a 2,3-dihydroxypropyl group, a 2,3-dialkoxypropyl group having 5 to 11 carbon atoms in total, a C₂₋₇ aminoalkyl group or a C₄₋₁₀ hydroxyalkyl group. The alkyl group may be a cycloalkyl group that forms a ring. R² and R³ are each independently a C₂₋₃ alkylene group.

The C₁₋₆ alkyl group (which may be a cycloalkyl group) is not particularly limited and may, for example, be a methyl group, an ethyl group, a n-propyl group, an isopropyl group, a cyclopropyl group, a n-butyl group, a sec-butyl group, an isobutyl group, a tert-butyl group, a cyclobutyl group, a n-pentyl group, a sec-pentyl group, an isopentyl group, a tert-pentyl group, a cyclopentyl group, a n-hexyl group, a sec-hexyl group, an isohexyl group, a tert-hexyl group or a cyclohexyl group.

The 2,3-dialkoxypropyl group having 5 to 11 carbon atoms in total is not particularly limited and may, for example, be a 2,3-dimethoxypropyl group (having 5 carbon atoms in total), a 2,3-diethoxypropyl group (having 7 carbon atoms in total), a 2,3-dipropoxypropyl group (having 9 carbon atoms in total) or a 2,3-dibutoxypropyl group (having 11 carbon atoms in total).

The C₂₋₇ aminoalkyl group (the alkyl group may be a cycloalkyl group) is not particularly limited and may, for example, be a 2-aminoethyl group, a 3-aminopropyl group or a 4-aminobutyl group.

The C₄₋₁₀ hydroxyalkyl group (the alkyl group may be a cycloalkyl group) is not particularly limited and may, for example, be a 2-hydroxybutyl group, a 2-hydroxypentyl group, a 2-hydroxyhexyl group, a 2-hydroxyheptyl group, a 2-hydroxycyclopentyl group, a 2-hydroxycyclohexyl group, a 2-hydroxycycloheptyl group, a 2-hydroxycyclooctyl group, a 2-hydroxycyclononyl group or a 2-hydroxycyclodecyl group.

The C₂₋₃ alkylene group is not particularly limited and may, for example, be an ethylene group or a propylene group, and more specifically may, for example, be a 1,2-ethylene group, a 1,2-propylene group or a 1,3-propylene group.

In the present invention, in the formula (4), R¹ and R² are, in view of excellence in carbon dioxide absorption/desorption efficiency, preferably each independently a hydrogen atom, a methyl group, an ethyl group, a 2-hydroxyethyl group, a 2-hydroxypropyl group, a 2-aminoethyl group or a 3-aminopropyl group.

In the present invention, in the formula (5), R¹ are, in view of excellence in carbon dioxide absorption/desorption efficiency, preferably each independently a hydrogen atom, a methyl group, an ethyl group, a 2-hydroxyethyl group, a 2-hydroxypropyl group, a 2-aminoethyl group or a 3-aminopropyl group.

In the present invention, in the formula (5), R² and R³ are, in view of excellence in carbon dioxide desorption efficiency, preferably each independently a 1,2-ethylene group, a 1,2-propylene group or a 1,3-propylene group, more preferably identical groups of 1,2-ethylene groups, 1,2-propylene groups or 1,3-propylene groups, more preferably identical groups of 1,2-ethylene groups.

In the present invention, the amine compound represented by the formula (5) is preferably an amine compound represented by the following formula (5a).

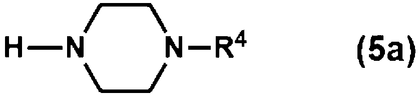

In the above formula, R⁴ is the same as R¹ in the formula (5).

Specific examples of the amine compounds (C) represented by the formulae (4) and (5) include cyclohexylamine, dicyclohexylamine, N-methylethylenediamine, N-isopropylethylenediamine, monoethanolamine, N-methylethanolamine, N-isopropylethanolamine, N,N-dimethylethanolamine, diethanolamine, N-methyldiethanolamine, N,N-dimethyl-1,4-diaminobutane, N-methyl-1,3-diaminopropane, N,N-dimethyl-1,3-diaminopropane, N,N-dimethyl-1,2-diaminopropane, N,N-dimethyl-1,2-diaminoethane, N,N-diethyl-1,3-diaminopropane, N,N-diethyl-1,2-diaminopropane, N,N-diethyl-1,2-diaminoethane, N-(2-aminoethyl)-2-aminoethanol, N-(3-aminopropyl)-2-aminoethanol, N-(2-aminopropyl)-2-aminoethanol, N-(4-aminobutyl)-2-aminoethanol, N-(2-aminoethyl)-3-aminopropanol, N-(3-aminopropyl)-3-aminopropanol, N-(2-aminopropyl)-3-aminopropanol, N-(4-aminobutyl)-3-aminopropanol, N-(2-aminoethyl)-4-aminobutanol, N-(3-aminopropyl)-4-aminobutanol, N-(2-aminopropyl)-4-aminobutanol, N-(4-aminobutyl)-4-aminobutanol, N-(2-aminocyclopentyl)-2-aminoethanol, N-(3-aminocyclopentyl)-2-aminoethanol, N-(2-aminocyclohexyl)-2-aminoethanol, N-(3-aminocyclohexyl)-2-aminoethanol, N-(4-aminocyclohexyl)-2-aminoethanol, N-(2-aminocyclopentyl)-3-aminopropanol, N-(3-aminocyclopentyl)-3-aminopropanol, N-(2-aminocyclohexyl)-3-aminopropanol, N-(3-aminocyclohexyl)-3-aminopropanol, N-(4-aminocyclohexyl)-3-aminopropanol, N-methylpiperazine, N-ethylpiperazine, N-(2-hydroxyethyl)piperazine, N-(2-hydroxypropyl)piperazine, N-(2-aminoethyl)piperazine, N-(3-aminopropyl)piperazine and N-(2,3-dihydroxypropyl)piperazine.

The amine compound (C) is, in view of excellence in carbon dioxide desorption efficiency, preferably at least one amine compound (C) selected from the group consisting of 1-(2,3-dihydroxypropyl)-piperazine, N-(2-aminoethyl)piperazine, N-(2-hydroxyethyl)piperazine, N-(2-aminoethyl)-2-aminoethanol, N-methyl-1,3-diaminopropane, N-methylethylenediamine, N-isopropylethylenediamine, monoethanolamine, diethanolamine, 1-(aminoethylamino)-2,3-dihydroxypropane and ethylenediamine, more preferably at least one amine compound (C) selected from the group consisting of 1-(2,3-dihydroxypropyl)-piperazine, N-(2-aminoethyl)piperazine, N-(2-hydroxyethyl)piperazine, N-(2-aminoethyl)-2-aminoethanol, monoethanolamine, diethanolamine and 1-(aminoethylamino)-2,3-dihydroxypropane.

The carbon dioxide separation composition of the present invention contains the amine compound (A), the amine compound (B) and carbon dioxide (the amine compound (A) and the amine compound (B) may each independently form a carbonate or a carbamate), as described above.

It is commonly known that an amine compound interact with carbon dioxide to form an amine carbonate or carbamate. The amine carbonate and amine carbamate are in chemical equilibrium with a mixture of the amine compound and the carbon dioxide, and by applying a physical source such as heating or depressurization, the chemical equilibrium may be shifted to the amine compound/carbon dioxide simple composition side.

Thus, in a case where the carbon dioxide separation composition of the present invention contains a carbonate and/or a carbamate of the amine compound (A) and/or the amine compound (B), the contents and the composition ratio (mass ratio, molar ratio or the like) of the amine compound (A), the amine compound (B) and the carbon dioxide, in the carbon dioxide separation composition of the present invention, are specified as considering that the carbonate and/or carbamate of the amine compound (A) as a simple composition of the amine compound (A) and the carbon dioxide, and considering that the carbonate and/or carbamate of the amine compound (B) as a single composition of the amine compound (B) and the carbon dioxide.

The content of the amine compound (A) in the carbon dioxide separation composition of the present invention is not particularly limited and is preferably 2 to 60 mass%, more preferably 3 to 50 mass%, further preferably 3 to 35 mass%, still more preferably 3 to 25 mass%, even more preferably 3 to 20 mass%, yet more preferably 3 to 15 mass%, based on the total amount of the carbon dioxide separation composition being 100 mass%.

The content of the amine compound (B) in the carbon dioxide separation composition of the present invention is not particularly limited and is preferably 3 to 60 mass%, more preferably 5 to 50 mass%, further preferably 8 to 35 mass%, based on the total amount of the carbon dioxide separation composition being 100 mass%.

The content of the carbon dioxide in the carbon dioxide separation composition of the present invention is not particularly limited and is preferably 1 to 30 mass%, more preferably 1 to 20 mass%, further preferably 1 to 15 mass%, based on the total amount of the carbon dioxide separation composition being 100 mass%.

In the carbon dioxide separation composition of the present invention, the composition ratio of the amine compound (A) and the amine compound (B) is not particularly limited and in view of excellence in carbon dioxide desorption efficiency, the ratio of the amine compound (B) is preferably 1 to 1000 parts by mass, more preferably 5 to 1000 parts by mass, further preferably 5 to 900 parts by mass, still more preferably 10 to 700 parts by mass, even more preferably 20 to 500 parts by mass, yet more preferably 50 to 250 parts by mass, per 100 parts by mass of the amine compound (A).

The content of the carbon dioxide in the carbon dioxide separation composition of the present invention is not particularly limited, and for example, per 100 parts by amount of substance (parts by mole) of the total amount of the amine compounds (A) and (B), the amount of the carbon dioxide is preferably 1 to 200 parts by amount of substance (parts by mole), more preferably 5 to 175 parts by amount of substance (parts by mole), further preferably 10 to 150 parts by amount of substance (parts by mole), still more preferably 20 to 120 parts by amount of substance (parts by mole), even more preferably 30 to 110 parts by amount of substance (parts by mole).

Regardless of whether or not the carbon dioxide separation composition of the present invention contains an amine compound other than the amine compounds (A) and (B) (for example, the amine compound (C) described later or other amine compound), the ratio of the content of the carbon dioxide in the carbon dioxide separation composition of the present invention to the content of all the amine compounds (hereinafter referred to as "total amine compounds") in the carbon dioxide separation composition of the present invention is not particularly limited. Per 100 parts by amount of substance (parts by mole) of the total amount of all the amine compounds, the amount of the carbon dioxide is preferably 1 to 200 parts by amount of substance (parts by mole), more preferably 5 to 175 parts by amount of substance (parts by mole), further preferably 10 to 150 parts by amount of substance (parts by mole), still more preferably 20 to 120 parts by amount of substance (parts by mole), even more preferably 30 to 110 parts by amount of substance (parts by mole).

The carbon dioxide separation composition of the present invention may further contain the amine compound (C).

In a case where the carbon dioxide separation composition of the present invention contains the amine compound (C), the amine compound (C) may form a carbonate or a carbamate.

In a case where the carbon dioxide separation composition of the present invention contains a carbonate or carbamate of the amine compound (C), the content and the composition ratio (mass ratio, molar ratio or the like) of the amine compound (C) and the carbon dioxide in the carbon dioxide separation composition of the present invention are specified as considering the carbonate or carbamate of the amine compound (C) as a simple composition of the amine compound (C) and the carbon dioxide.

In a case where the carbon dioxide separation composition of the present invention contains the amine compound (C), the content of the amine compound (C) is not particularly limited and is preferably 2 to 30 mass%, more preferably 5 to 25 mass%, further preferably 10 to 20 mass%, based on the total amount of the carbon dioxide separation composition containing the amine compound (C) being 100 mass%.

In a case where the carbon dioxide separation composition of the present invention contains the amine compound (C), the content of the carbon dioxide in the carbon dioxide separation composition is not particularly limited and for example, per 100 parts by amount of substance (parts by mole) of the total amount of the amine compound (A), the amine compound (B) and the amine compound (C), the content of the carbon dioxide is preferably 1 to 200 parts by amount of substance (parts by mole), more preferably 5 to 175 parts by amount of substance (parts by mole), further preferably 10 to 150 parts by amount of substance (parts by mole), still more preferably 20 to 120 parts by amount of substance (parts by mole), even more preferably 30 to 110 parts by amount of substance (parts by mole).

Further, the carbon dioxide separation composition of the present invention may contain an amine compound other than the amine compound (A), the amine compound (B) and the amine compound (C) (hereinafter referred to as "other amine compound").

In a case where the carbon dioxide separation composition of the present invention contains the other amine compound, the other amine compound may form a carbonate or carbamate.

In a case where the carbon dioxide separation composition of the present invention contains a carbonate or carbamate of the other amine compound, the contents and the composition ratio (mass ratio, molar ratio or the like) of the other amine compound and the carbon dioxide in the carbon dioxide separation composition of the present invention are specified as considering the carbonate or carbamate of the other amine compound as a single composition of the other amine compound and the carbon dioxide.

In a case where the carbon dioxide separation composition of the present invention contains the other amine compound, the content of the other amine compound is not particularly limited and is preferably 2 to 30 mass%, more preferably 5 to 25 mass%, further preferably 10 to 20 mass%, based on the total amount of the carbon dioxide separation composition containing the other amine compound being 100 mass%.

In a case where the carbon dioxide separation composition of the present invention contains the other amine compound, the content of the carbon dioxide in the carbon dioxide separation composition is not particularly limited and for example, per 100 parts by amount of substance (parts by mole) of the total amount of the amine compound (A), the amine compound (B) and the other amine compound, the content of the carbon dioxide is preferably 1 to 200 parts by amount of substance (parts by mole), more preferably 5 to 175 parts by amount of substance (parts by mole), further preferably 10 to 150 parts by amount of substance (parts by mole), still more preferably 20 to 120 parts by amount of substance (parts by mole), even more preferably 30 to 110 parts by amount of substance (parts by mole).

Further, the carbon dioxide separation composition of the present invention may further contain water, and the content of the water is preferably 30 to 75 mass%, more preferably 35 to 70 mass%, further preferably 40 to 65 mass%, based on the total amount of the carbon dioxide separation composition containing the water being 100 mass%.

The carbon dioxide separation composition of the present invention may further contain a solvent other than water (hereinafter referred to as "organic solvent"). The organic solvent is not particularly limited and may, for example, be methanol, ethanol, propanol, isopropanol, ethylene glycol, propylene glycol, glycerin or ethylene glycol monomethyl ether.

The content of the organic solvent is preferably 1 to 30 mass%, more preferably 2 to 25 mass%, further preferably 5 to 20 mass%, based on the total amount of the carbon dioxide separation composition containing the organic solvent being 100 mass%.

The carbon dioxide separation composition of the present invention may further contain a component other than the above. Such a component may, for example, be a surfactant, a defoaming agent or an antioxidant.

The content of the total amine compounds (the total amount of the amine compound (A), the amine compound (B), the amine compound (C) and other amine compound) in the carbon dioxide separation composition of the present invention is, with a view to increasing the carbon dioxide desorption amount per unit mass, preferably 10 to 70 mass%, more preferably 20 to 60 mass%, further preferably 25 to 50 mass%, based on the total amount of the carbon dioxide separation composition containing the total amine compounds being 100 mass%.

The carbon dioxide contained in the carbon dioxide separation composition of the present invention may be contained in any state so long as it is mixed with the above amine compounds and the like.

The carbon dioxide in the carbon dioxide separation composition of the present invention is discharged out of the composition system by heating. Thus, by measuring the discharge amount, the content of the carbon dioxide can be confirmed.

The content of the carbon dioxide in the carbon dioxide separation composition of the present invention may also be confirmed by a total organic carbon meter or a nuclear magnetic resonance spectrometer.

The carbon dioxide separation composition of the present invention may be produced by mixing at least the amine compound (A), the amine compound (B), and a gaseous, liquid or solid carbon dioxide, and is produced preferably by mixing at least the amine compound (A), the amine compound (B) and a gas containing carbon dioxide or dry ice.

In the above production method, the amine compound (C), the other amine compound, water and/or the organic solvent may be mixed simultaneously or separately.

In a case where the amine compound (A), the amine compound (B), the gaseous, liquid or solid carbon dioxide, the amine compound (C), the other amine compound, the water and/or the organic solvent are mixed sequentially, the order of mixing is not particularly limited.

In the carbon dioxide separation composition of the present invention, and in the method for producing it, the amine compounds of the above formulae (1), (2), (3), (4) and (5) and the other amine compound may be commercial products, or may be synthesized by a known method. The purities of such amine compounds are not particularly limited and are respectively preferably 90% or more, more preferably 95% or more.

When at least the amine compound (A), the amine compound (B), the gaseous, liquid or solid carbon dioxide are mixed, the carbon dioxide separation composition of the present invention obtained by mixing is preferably liquid at 0°C or below under atmospheric pressure.

The gaseous, liquid or solid carbon dioxide is preferably a gas containing carbon dioxide in view of excellent operation property.

In a case where the gas containing carbon dioxide is used as the gaseous, liquid or solid carbon dioxide, the method of mixing at least the amine compound (A), the amine compound (B) and the gas containing carbon dioxide, is not particularly limited and a known method may be employed. The known method may, for example, be bubbling method, or countercurrent contact method using a packed column or a plate column.

The gas containing carbon dioxide may be pure carbon dioxide gas or may be a gas mixture of carbon dioxide and other gas. The other gas is not particularly limited and may, for example, be air, nitrogen, oxygen, hydrogen, argon, neon, helium, carbon monoxide, water vapor, methane, ethane, propane, butane, ethylene, propylene, butene, isobutene, butadiene or nitrogen oxide.

The method of mixing at least the amine compound (A), the amine compound (B) and the gaseous, liquid or solid carbon dioxide is not particularly limited and may be a method of mixing and stirring at least the amine compound (A), the amine compound (B) and the gaseous, liquid or solid carbon dioxide while adjusting the temperature to be within a range of -30°C to 80°C.

The carbon dioxide separation composition of the present invention can absorb carbon dioxide highly selectively by being brought into contact with the gas containing carbon dioxide, and desorbs the absorbed carbon dioxide by being subjected to high temperature and/or depressurization. Thus, the carbon dioxide separation composition of the present invention can be used as a carbon dioxide separating agent. Such an operation of separating carbon dioxide will be hereinafter referred to also as carbon dioxide separation process.

In the carbon dioxide separation process, the method of bringing the gas containing carbon dioxide into contact with the carbon dioxide separation composition of the present invention is not particularly limited and a known method may be employed. The known method may, for example, be bubbling method, or countercurrent contact method using a packed column or a plate column.

In the carbon dioxide separation process, the temperature at which the gas containing carbon dioxide is absorbed in the carbon dioxide separation composition of the present invention is not particularly limited and is usually within a range of from 0°C to 50°C.

In the carbon dioxide separation process, the temperature at which the carbon dioxide is desorbed from the carbon dioxide separation composition of the present invention is not particularly limited and is usually within a range of from 60 to 150°C. However, in view of energy reduction, it is preferably 100°C or lower.

Further, the carbon dioxide separation composition of the present invention may be used as a carbon dioxide absorbing/desorbing agent having the composition supported on or attached to an optional carrier.

The carrier is not particularly limited and may, for example, be silica, alumina, magnesia, porous glass, activated carbon or polymethyl methacrylate-based porous resin or fibers.

The silica may be crystalline or non-crystalline (amorphous), and various types such as zeolite silica with pores and mesoporous silica are known. Silica to be used for the carbon dioxide absorbing/desorbing agent of the present invention is not particularly limited and industrially distributed silica may be used, and silica having a large surface area is preferred.

The amount of the carbon dioxide separation composition in the carbon dioxide absorbing/desorbing agent is, in view of excellent carbon dioxide absorption amount, preferably 5 to 70 mass%, more preferably 10 to 60 mass%, to the weight of the carrier supporting the carbon dioxide separation composition.

The amount of the water contained in the carbon dioxide absorbing/desorbing agent using the carrier is equimolar amount to the carbon dioxide to be absorbed or more. When the amount of the water is equimolar amount to the carbon dioxide or more, the carbon dioxide desorption energy will not be too high.

The gas containing carbon dioxide used in the carbon dioxide separation process may be pure carbon dioxide gas or may be a gas mixture containing carbon dioxide and other gas. Such other gas is not particularly limited and may, for example, be the air, nitrogen, oxygen, hydrogen, argon, neon, helium, carbon monoxide, water vapor, methane or nitrogen oxides.

The gas containing carbon dioxide used in the carbon dioxide separation process is more preferably combustion exhaust gas. The gas mixture containing the carbon dioxide has a carbon dioxide concentration of preferably 5 vol% or more, more preferably 10 vol% or more.

The carbon dioxide separation composition of the present invention is not particularly limited and is applicable, for example, to separation of carbon dioxide from combustion exhaust gas generated from e.g. heat power plants, steel plants and cement factories, and separation of carbon dioxide from steam reformed gas obtained in steam reforming process.

### EXAMPLES

Now, the present invention will be described in further detail with reference to Examples. However, it should be understood that the present invention is by no means restricted to such specific Examples.

In the following examples, the ratio of the amount of substance (molar ratio) of carbon dioxide to the total amine compounds was calculated from the integration ratio of the peak attributable to the amine compounds and the peak attributable to the carbon dioxide as measured by inverse gated decoupling using a nuclear magnetic resonance spectrometer.

### Example 1

5 g of 1,4-diazabicyclo[2,2,2]octane-2-methanol (manufactured by Tosoh Corporation), 35 g of piperazine (manufactured by Tokyo Chemical Industry Co., Ltd., anhydrous) and 60 g of pure water were put in a 200 mL gas absorbing bottle and adjusted to a temperature of 40°C in a water bath, and mixed and stirred to obtain a uniform solution. To the solution adjusted to a temperature of 40°C in a water bath, a gas mixture of a carbon dioxide gas at 140 mL/min and a nitrogen gas at 560 mL/min was blown to let the carbon dioxide gas be absorbed, and then the gas absorbing bottle was adjusted to a temperature of 60°C and a nitrogen gas at 200 mL/min was blown so that the once absorbed carbon dioxide gas was partially discharged. At a point when the amount of the carbon dioxide dissolved in the solution reached 12.8 g, the discharge was terminated. The carbon dioxide gas absorption amount and discharge amount were monitored by a gas flow meter and a carbon dioxide concentration meter. The ratio of the amount of substance of the carbon dioxide to the total amine compounds in the solution (number of moles of carbon dioxide/number of moles of total amine compounds) was 0.66.

Part of the obtained solution (corresponding to the carbon dioxide separation composition of the present invention) was put in a 20 mL sample bottle to prepare two storage test samples. One of the samples was left at rest at 20°C (incubator) for one week, and the other was left at rest at -5°C (low temperature incubator) for one week. In both samples, no precipitation of the piperazine was observed, no solidification of the solution was observed, and a liquid state was maintained.

### Example 2

10 g of 1,4-diazabicyclo[2,2,2]octane-2-methanol (manufactured by Tosoh Corporation), 30 g of piperazine (manufactured by Tokyo Chemical Industry Co., Ltd., anhydrous) and 60 g of pure water were put in a 200 mL gas absorbing bottle and adjusted to a temperature of 40°C in a water bath, and mixed and stirred to obtain a uniform solution. To the solution adjusted to a temperature of 40°C in a water bath, a gas mixture of a carbon dioxide gas at 140 mL/min and a nitrogen gas at 560 mL/min was blown to let the carbon dioxide gas be absorbed, and then the gas absorbing bottle was adjusted to a temperature of 60°C and a nitrogen gas at 200 mL/min was blown so that the once absorbed carbon dioxide gas was partially discharged. At a point when the amount of the carbon dioxide dissolved in the solution reached 8.7 g, the discharge was terminated. The carbon dioxide gas absorption amount and discharge amount were monitored by a gas flow meter and a carbon dioxide concentration meter. The ratio of the amount of substance of the carbon dioxide to the total amine compounds in the solution (number of moles of carbon dioxide/number of moles of total amine compounds) was 0.47.

Part of the obtained solution (corresponding to the carbon dioxide separation composition of the present invention) was put in a 20 mL sample bottle to prepare two storage test samples. One of the samples was left at rest at 20°C (incubator) for one week, and the other was left at rest at -5°C (low temperature incubator) for one week. In both samples, no precipitation of the piperazine was observed, no solidification of the solution was observed, and a liquid state was maintained.

### Example 3

20 g of 1,4-diazabicyclo[2,2,2]octane-2-methanol (manufactured by Tosoh Corporation), 20 g of piperazine (manufactured by Tokyo Chemical Industry Co., Ltd., anhydrous) and 60 g of pure water were put in a 200 mL gas absorbing bottle and adjusted to a temperature of 40°C in a water bath, and mixed and stirred to obtain a uniform solution. To the solution adjusted to a temperature of 40°C in a water bath, a gas mixture of a carbon dioxide gas at 140 mL/min and a nitrogen gas at 560 mL/min was blown to let the carbon dioxide gas be absorbed, and then the gas absorbing bottle was adjusted to a temperature of 60°C and a nitrogen gas at 200 mL/min was blown so that the once absorbed carbon dioxide gas was partially discharged. At a point when the amount of the carbon dioxide dissolved in the solution reached 7.4 g, the discharge was terminated. The carbon dioxide gas absorption amount and discharge amount were monitored by a gas flow meter and a carbon dioxide concentration meter. The ratio of the amount of substance of the carbon dioxide to the total amine compounds in the solution (number of moles of carbon dioxide/number of moles of total amine compounds) was 0.45.

Part of the obtained solution (corresponding to the carbon dioxide separation composition of the present invention) was put in a 20 mL sample bottle to prepare two storage test samples. One of the samples was left at rest at 20°C (incubator) for one week, and the other was left at rest at -5°C (low temperature incubator) for one week. In both samples, no precipitation of the piperazine was observed, no solidification of the solution was observed, and a liquid state was maintained.

### Example 4

15 g of 1,4-diazabicyclo[2,2,2]octane-2-methanol (manufactured by Tosoh Corporation), 10 g of piperazine (manufactured by Tokyo Chemical Industry Co., Ltd., anhydrous), 15 g of N-(2-aminoethyl)piperazine (manufactured by Tokyo Chemical Industry Co., Ltd.) and 60 g of pure water were put in a 200 mL gas absorbing bottle and adjusted to a temperature of 40°C in a water bath, and mixed and stirred to obtain a uniform solution. To the solution adjusted to a temperature of 40°C in a water bath, a gas mixture of a carbon dioxide gas at 140 mL/min and a nitrogen gas at 560 mL/min was blown to let the carbon dioxide gas be absorbed, and then the gas absorbing bottle was adjusted to a temperature of 60°C and a nitrogen gas at 200 mL/min was blown so that the once absorbed carbon dioxide gas was partially discharged. At a point when the amount of the carbon dioxide dissolved in the solution reached 5.9 g, the discharge was terminated. The carbon dioxide gas absorption amount and discharge amount were monitored by a gas flow meter and a carbon dioxide concentration meter. The ratio of the amount of substance of the carbon dioxide to the total amine compounds in the solution (number of moles of carbon dioxide/number of moles of total amine compounds) was 0.40.

Part of the obtained solution (corresponding to the carbon dioxide separation composition of the present invention) was put in a 20 mL sample bottle to prepare two storage test samples. One of the samples was left at rest at 20°C (incubator) for one week, and the other was left at rest at -5°C (low temperature incubator) for one week. In both samples, no precipitation of the piperazine was observed, no solidification of the solution was observed, and a liquid state was maintained.

### Example 5

5 g of 1,4-diazabicyclo[2,2,2]octane-2-methanol (manufactured by Tosoh Corporation), 27 g of 1-(2-dimethylaminoethyl)-4-methylpiperazine (manufactured by Tokyo Chemical Industry Co., Ltd.), 15 g of piperazine (manufactured by Tokyo Chemical Industry Co., Ltd., anhydrous) and 53 g of pure water were put in a 200 mL gas absorbing bottle and adjusted to a temperature of 40°C in a water bath, and mixed and stirred to obtain a uniform solution. To the solution adjusted to a temperature of 60°C in a water bath, a gas mixture of a carbon dioxide gas at 10 mL/min and a nitrogen gas at 690 mL/min was blown, and the carbon dioxide gas absorption amount was monitored by a gas flow meter and a carbon dioxide concentration meter. At a point when the amount of the carbon dioxide dissolved in the solution reached 4.8 g, the blowing was terminated. The ratio of the amount of substance of the carbon dioxide to the total amine compounds in the solution (number of moles of carbon dioxide/number of moles of total amine compounds) was 0.30.

Part of the obtained solution (corresponding to the carbon dioxide separation composition of the present invention) was put in a 20 mL sample bottle to prepare two storage test samples. One of the samples was left at rest at 20°C (incubator) for one week, and the other was left at rest at -5°C (low temperature incubator) for one week. In both samples, no precipitation of the piperazine was observed, no solidification of the solution was observed, and a liquid state was maintained.

### Example 6

5 g of 1,4-diazabicyclo[2,2,2]octane-2-methanol (manufactured by Tosoh Corporation), 22 g of 1-(2-dimethylaminoethyl)-4-methylpiperazine (manufactured by Tokyo Chemical Industry Co., Ltd.), 20 g of piperazine (manufactured by Tokyo Chemical Industry Co., Ltd., anhydrous) and 53 g of pure water were put in a 200 mL gas absorbing bottle and adjusted to a temperature of 40°C in a water bath, and mixed and stirred to obtain a uniform solution. To the solution adjusted to a temperature of 60°C in a water bath, a gas mixture of a carbon dioxide gas at 10 mL/min and a nitrogen gas at 690 mL/min was blown, and the carbon dioxide gas absorption amount was monitored by a gas flow meter and a carbon dioxide concentration meter. At a point when the amount of the carbon dioxide dissolved in the solution reached 6.0 g, the blowing was terminated. The ratio of the amount of substance of the carbon dioxide to the total amine compounds in the solution (number of moles of carbon dioxide/number of moles of total amine compounds) was 0.35.

Part of the obtained solution (corresponding to the carbon dioxide separation composition of the present invention) was put in a 20 mL sample bottle to prepare two storage test samples. One of the samples was left at rest at 20°C (incubator) for one week, and the other was left at rest at -5°C (low temperature incubator) for one week. In both samples, no precipitation of the piperazine was observed, no solidification of the solution was observed, and a liquid state was maintained.

### Example 7

5 g of 1,4-diazabicyclo[2,2,2]octane-2-methanol (manufactured by Tosoh Corporation), 32 g of 1-(2-dimethylaminoethyl)-4-methylpiperazine (manufactured by Tokyo Chemical Industry Co., Ltd.), 10 g of piperazine (manufactured by Tokyo Chemical Industry Co., Ltd., anhydrous) and 53 g of pure water were put in a 200 mL gas absorbing bottle and adjusted to a temperature of 40°C in a water bath, and mixed and stirred to obtain a uniform solution. To the solution adjusted to a temperature of 80°C in a water bath, a gas mixture of a carbon dioxide gas at 10 mL/min and a nitrogen gas at 690 mL/min was blown, and the carbon dioxide gas absorption amount was monitored by a gas flow meter and a carbon dioxide concentration meter. At a point when the amount of the carbon dioxide dissolved in the solution reached 1.7 g, the blowing was terminated. The ratio of the amount of substance of the carbon dioxide to the total amine compounds in the solution (number of moles of carbon dioxide/number of moles of total amine compounds) was 0.11.

Part of the obtained solution (corresponding to the carbon dioxide separation composition of the present invention) was put in a 20 mL sample bottle to prepare two storage test samples. One of the samples was left at rest at 20°C (incubator) for one week, and the other was left at rest at -5°C (low temperature incubator) for one week. In both samples, no precipitation of the piperazine was observed, no solidification of the solution was observed, and a liquid state was maintained.

### Example 8

10 g of 1,4-diazabicyclo[2,2,2]octane-2-methanol (manufactured by Tosoh Corporation), 22 g of 1-(2-dimethylaminoethyl)-4-methylpiperazine (manufactured by Tokyo Chemical Industry Co., Ltd.), 15 g of piperazine (manufactured by Tokyo Chemical Industry Co., Ltd., anhydrous) and 53 g of pure water were put in a 200 mL gas absorbing bottle and adjusted to a temperature of 40°C in a water bath, and mixed and stirred to obtain a uniform solution. To the solution adjusted to a temperature of 60°C in a water bath, a gas mixture of a carbon dioxide gas at 10 mL/min and a nitrogen gas at 690 mL/min was blown, and the carbon dioxide gas absorption amount was monitored by a gas flow meter and a carbon dioxide concentration meter. At a point when the amount of the carbon dioxide dissolved in the solution reached 5.1 g, the blowing was terminated. The ratio of the amount of substance of the carbon dioxide to the total amine compounds in the solution (number of moles of carbon dioxide/number of moles of total amine compounds) was 0.31.

Part of the obtained solution (corresponding to the carbon dioxide separation composition of the present invention) was put in a 20 mL sample bottle to prepare two storage test samples. One of the samples was left at rest at 20°C (incubator) for one week, and the other was left at rest at -5°C (low temperature incubator) for one week. In both samples, no precipitation of the piperazine was observed, no solidification of the solution was observed, and a liquid state was maintained.

### Comparative Example 1

40 g of piperazine (manufactured by Tokyo Chemical Industry Co., Ltd., anhydrous) and 40 g of N-methyldiethanolamine (manufactured by FUJIFILM Wako Pure Chemical Corporation) were dissolved in 120 g of warm water of 50°C to produce an aqueous solution containing 20 wt% of piperazine and 20 wt% of N-methyldiethanolamine. The liquid temperature was adjusted to 40°C, and then a gas containing 20% of CO₂ was blown at 300 mL/min through a glass ball filter for 1 hour. The amount of CO₂ absorbed in the solution was 5.9 g, as obtained by measurement of the inorganic carbon amount by a gas chromatographic total organic carbon meter, and the ratio to the piperazine in the solution was 0.289 mol/mol. The ratio of the amount of substance of the carbon dioxide to the total amine compounds in the solution (number of moles of carbon dioxide/number of moles of total amine compounds) was 0.17.

Part of the obtained solution was put in a 20 mL sample bottle to prepare two storage test samples. One of the samples was left at rest at 20°C (incubator) for one week, and the other was left at rest at -5°C (low temperature incubator) for one week. In both samples, no precipitation of the piperazine was observed. The sample stored at 20°C remained liquid, however, the sample stored at -5°C was entirely solidified.

### Comparative Example 2

20 g of 1,4-diazabicyclo[2,2,2]octane-2-methanol (manufactured by Tosoh Corporation), 20 g of piperazine (manufactured by Tokyo Chemical Industry Co., Ltd., anhydrous) and 60 g of pure water were put in a 200 mL sample bottle and adjusted to a temperature of 40°C in a water bath, and mixed and stirred to obtain a uniform solution. Part of the solution was put in a 20 mL sample bottle and left at rest at -5°C (low temperature incubator) for one week. The entire solution was solidified.

### Comparative Example 3

30 g of 1,4-diazabicyclo[2,2,2]octane-2-methanol (manufactured by Tosoh Corporation), 10 g of piperazine (manufactured by Tokyo Chemical Industry Co., Ltd., anhydrous) and 60 g of pure water were put in a 200 mL sample bottle and adjusted to a temperature of 40°C in a water bath, and mixed and stirred to obtain a uniform solution. Part of the solution was put in a 20 mL sample bottle and left at rest at -5°C (low temperature incubator) for one week. The entire solution was solidified.

### Comparative Example 4

15 g of 1,4-diazabicyclo[2,2,2]octane-2-methanol (manufactured by Tosoh Corporation), 10 g of piperazine (manufactured by Tokyo Chemical Industry Co., Ltd., anhydrous), 15 g of N-(2-aminoethyl)piperazine (manufactured by Tokyo Chemical Industry Co., Ltd.) and 60 g of pure water were put in a 200 mL sample bottle and adjusted to a temperature of 40°C in a water bath, and mixed and stirred to obtain a uniform solution. Part of the solution was put in a 20 mL sample bottle and left at rest at -5°C (low temperature incubator) for one week. The entire solution was solidified.

### Comparative Example 5

20 g of N,N,N',N",N"-pentamethyldiethylenetriamine (manufactured by Tokyo Chemical Industry Co., Ltd.), 20 g of piperazine (manufactured by Tokyo Chemical Industry Co., Ltd., anhydrous) and 60 g of pure water were put in a 200 mL sample bottle and adjusted to a temperature of 40°C in a water bath, and mixed and stirred to obtain a uniform solution. Part of the solution was put in a 20 mL sample bottle and left at rest at -5°C (low temperature incubator) for one week. The entire solution was solidified.

### Comparative Example 6

27 g of N,N,N',N",N"-pentamethyldiethylenetriamine (manufactured by Tokyo Chemical Industry Co., Ltd.), 10 g of piperazine (manufactured by Tokyo Chemical Industry Co., Ltd., anhydrous) and 63 g of pure water were put in a 200 mL sample bottle and adjusted to a temperature of 40°C in a water bath, and mixed and stirred to obtain a uniform solution. Part of the solution was put in a 20 mL sample bottle and left at rest at -5°C (low temperature incubator) for one week. The entire solution was solidified.

### Comparative Example 7

5 g of N-methyldiethanolamine (manufactured by FUJIFILM Wako Pure Chemical Corporation), 35 g of piperazine (manufactured by Tokyo Chemical Industry Co., Ltd., anhydrous) and 60 g of pure water were put in a 200 mL sample bottle and adjusted to a temperature of 40°C in a water bath, and mixed and stirred to obtain a uniform solution. Part of the solution was put in a 20 mL sample bottle and left at rest at -5°C (low temperature incubator) for one week. The entire solution was solidified.

### Comparative Example 8

30 g of N-methyldiethanolamine (manufactured by FUJIFILM Wako Pure Chemical Corporation), 10 g of piperazine (manufactured by Tokyo Chemical Industry Co., Ltd., anhydrous) and 60 g of pure water were put in a 200 mL sample bottle and adjusted to a temperature of 40°C in a water bath, and mixed and stirred to obtain a uniform solution. Part of the solution was put in a 20 mL sample bottle and left at rest at -5°C (low temperature incubator) for one week. The entire solution was solidified.

### Comparative Example 9

5 g of 1,4-diazabicyclo[2,2,2]octane-2-methanol (manufactured by Tosoh Corporation), 32 g of 1-(2-dimethylaminoethyl)-4-methylpiperazine (manufactured by Tokyo Chemical Industry Co., Ltd.), 10 g of piperazine (manufactured by Tokyo Chemical Industry Co., Ltd., anhydrous) and 53 g of pure water were put in a 200 mL gas absorbing bottle and adjusted to a temperature of 40°C in a water bath, and mixed and stirred to obtain a uniform solution. Part of the solution was put in a 20 mL sample bottle and left at rest at -5°C (low temperature incubator) for one week. The entire solution was solidified.

### Comparative Example 10

20 g of bis (2-dimethylaminoethyl)ether (manufactured by Tokyo Chemical Industry Co., Ltd.), 20 g of piperazine (manufactured by Tokyo Chemical Industry Co., Ltd., anhydrous) and 60 g of pure water were put in a 200 mL gas absorbing bottle and adjusted to a temperature of 40°C in a water bath, and mixed and stirred to obtain a uniform solution. Part of the solution was put in a 20 mL sample bottle and left at rest at -5°C (low temperature incubator) for one week. The entire solution was solidified.

**Table 1**

| | Example 1 | Example 2 | Example 3 | Example 4 |
|---|---|---|---|---|
| Amine compound (A) | | | | |
| 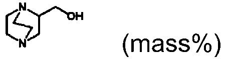 | 4.4 | 9.2 | 18.6 | 14.2 |
| Amine compound (B) | | | | |
| 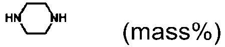 | 31.0 | 27.6 | 18.6 | 9.4 |
| Amine compound (C) | | | | |
| 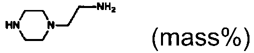 | | | | 14.2 |
| Water (mass%) | 53.2 | 55.2 | 55.9 | 56.6 |
| Carbon dioxide (mass%) | 11.4 | 8.0 | 6.9 | 5.6 |
| Carbon dioxide/total amine compounds (ratio by amount of substance) | 0.66 | 0.47 | 0.45 | 0.40 |
| Piperazine precipitation (O:none, × :observed) | | | | |
| 20°C | ○ | ○ | ○ | ○ |
| Solidification (O:none, × :observed) | | | | |
| -5°C | ○ | ○ | ○ | ○ |

**Table 2**

| | Example 5 | Example 6 | Example 7 | Example 8 |
|---|---|---|---|---|
| Amine compound (A) | | | | |
| 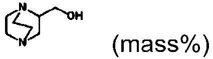 | 4.8 | 4.7 | 4.9 | 9.5 |
| 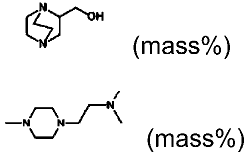 | 25.7 | 20.7 | 31.5 | 20.9 |
| Amine compound (B) | | | | |
| 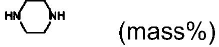 | 14.3 | 18.9 | 9.8 | 14.3 |
| Water (mass%) | 50.6 | 50.0 | 52.1 | 50.5 |
| Carbon dioxide (mass%) | 4.6 | 5.7 | 1.6 | 4.8 |
| Carbon dioxide/total amine compounds (ratio by amount of substance) | 0.30 | 0.35 | 0.11 | 0.31 |
| Piperazine precipitation (O:none, × :observed) | | | | |
| 20°C | ○ | ○ | ○ | ○ |
| Solidification (O:none, × :observed) | | | | |
| -5°C | ○ | ○ | ○ | ○ |

**Table 3**

| | Comp. Ex. 1 |
|---|---|
| N-methyldiethanolamine | |
| 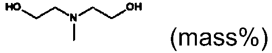 | 19.4 |
| Amine compound (B) | |
| 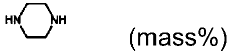 | 19.4 |
| Water (mass%) | 58.3 |
| Carbon dioxide (mass%) | 2.9 |
| Carbon dioxide/total amine compounds (ratio by amount of substance) | 0.17 |
| Piperazine precipitation (O:none, × :observed) | |
| 20°C | ○ |
| Solidification (O:none, × :observed) | |
| -5°C | × |

**Table 4**

| | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|
| Amine compound (A) | | | | | | | |
| 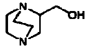 (mass%) | 20 | 30 | 15 | | | | |
| N,N,N',N",N" -pentamethyl diethylenetriamine | | | | | | | |
| 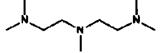 (mass%) | | | | 20 | 27 | | |
| N-methyldiethanol amine | | | | | | | |
| 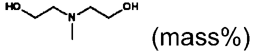 | | | | | | 5 | 30 |
| Amine compound (B) | | | | | | | |
| 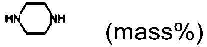 | 20 | 10 | 10 | 20 | 10 | 35 | 10 |
| Amine compound (C) | | | | | | | |
| 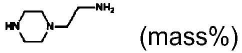 | | | 15 | | | | |
| Water (mass%) | 60 | 60 | 60 | 60 | 63 | 60 | 60 |
| Carbon dioxide (mass%) | 0 | 0 | 0 | 0 | 0 | 0 | 0 |
| Carbon dioxide/total amine compounds (ratio by amount of substance) | 0 | 0 | 0 | 0 | 0 | 0 | 0 |
| Solidification (O:none, × :observed) | | | | | | | |
| -5°C | × | × | × | × | × | × | × |

**Table 5**

| | Comp. Ex. 9 | Comp. Ex. 10 |
|---|---|---|
| Amine compound (A) | | |
| 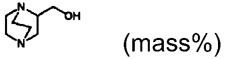 | 5 | |
| 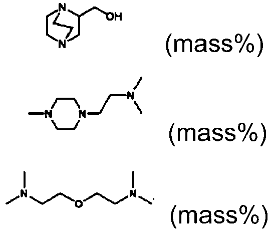 | 32 | |
| 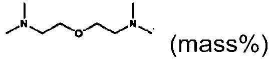 | | 20 |
| Amine compound (B) | | |
| 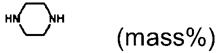 | 10 | 20 |
| Water (mass%) | 53 | 60 |
| Carbon dioxide (mass%) | 0 | 0 |
| Carbon dioxide/total amine compounds (ratio by amount of substance) | 0 | 0 |
| Solidification (O:none, × :observed) | | |
| -5°C | × | × |

The present invention has been described in detail with reference to specific embodiments. However, it is apparent to those skilled in the art that various changes and modifications are possible without departing from the concept and the range of the present invention.

The entire disclosures of Japanese Patent Application No. 2023-18851 filed on February 10, 2023 and Japanese Patent Application No. 2023-204267 filed on December 1, 2023 including specifications, claims, drawings and summaries are incorporated herein by reference in their entireties.

### INDUSTRIAL APPLICABILITY

As evident from Examples 1 to 8 and Comparative Examples 1 to 10, the carbon dioxide separation composition of the present invention solves the problems of prior art of solidification at degrees of frost. The carbon dioxide separation composition of the present invention is industrially very useful in that it can be handled as a stable liquid even at degrees of frost.

## Claims

1. A carbon dioxide separation composition, containing an amine compound (A) represented by the following formula (1) or (2), an amine compound (B) represented by the following formula (3) and carbon dioxide (the amine compound (A) and the amine compound (B) may each independently form a carbonate or a carbamate), 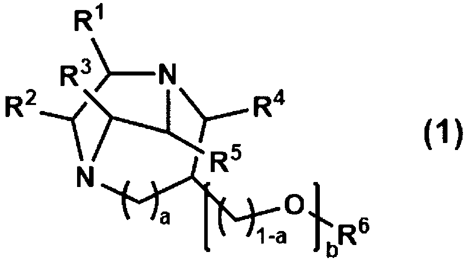 in the above formula, R¹ to R⁶ are each independently a hydrogen atom or a C₁₋₃ alkyl group, and a and b are each independently 0 or 1; 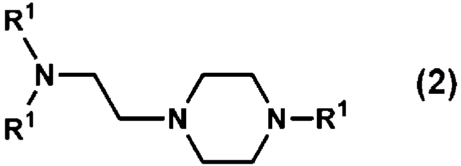 in the above formula, R¹ are each independently a C₁₋₃ alkyl group; 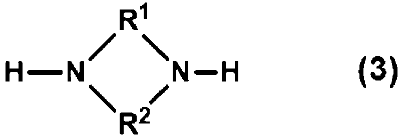 in the above formula, R¹ and R² are each independently a C₂₋₃ alkylene group.

2. The carbon dioxide separation composition according to Claim 1, wherein the amine compound (A) is at least one amine compound (A) selected from the group consisting of 1-(2-dimethylaminoethyl)-4-methylpiperazine, 1,4-diazabicyclo[2.2.2]octane-2-methanol and 1,4-diazabicyclo[2.2.2]octane.

3. The carbon dioxide separation composition according to Claim 1, wherein the amine compound (B) is piperazine or homopiperazine.

4. The carbon dioxide separation composition according to Claim 1, wherein the amount of substance of the carbon dioxide is 10 to 150 parts by amount of substance (parts by mole) per 100 parts by amount of substance (parts by mole) of the total amount of the amine compound (A) and the amine compound (B).

5. The carbon dioxide separation composition according to Claim 1, wherein with respect to the composition ratio of the amine compound (B) to the amine compound (A), the ratio of the amine compound (B) is 5 to 1000 parts by mass per 100 parts by mass of the amine compound (A).

6. The carbon dioxide separation composition according to Claim 1, which further contains an amine compound (C) represented by the following formula (4) or (5), 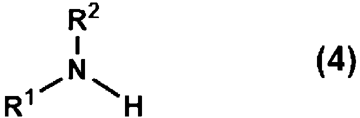 in the above formula, R¹ and R² are each independently a hydrogen atom, a C₁₋₆ alkyl group, a hydroxymethyl group, a 2-hydroxyethyl group, a 2-hydroxypropyl group, a 2,3-dihydroxypropyl group, a 2,3-dialkoxypropyl group having 5 to 11 carbon atoms in total, a C₂₋₇ aminoalkyl group or a C₄₋₁₀ hydroxyalkyl group, the alkyl group may be a cycloalkyl group that forms a ring; 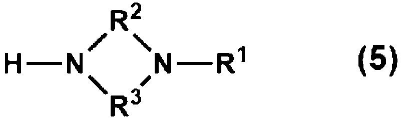 in the above formula, R¹ is a C₁₋₆ alkyl group, a hydroxymethyl group, a 2-hydroxyethyl group, a 2-hydroxypropyl group, a 2,3-dihydroxypropyl group, a 2,3-dialkoxypropyl group having 5 to 11 carbon atoms in total, a C₂₋₇ aminoalkyl group or a C₄₋₁₀ hydroxyalkyl group, the alkyl group may be a cycloalkyl group that forms a ring, and R² and R³ are each independently a C₂₋₃ alkylene group.

7. The carbon dioxide separation composition according to Claim 6, wherein the amine compound (C) is at least one amine compound (C) selected from the group consisting of 1-(2,3-dihydroxypropyl)-piperazine, N-(2-aminoethyl)piperazine, N-(2-hydroxyethyl)piperazine, N-(2-aminoethyl)-2-aminoethanol, N-methyl-1,3-diaminopropane, N-methylethylenediamine, N-isopropylethylenediamine, monoethanolamine, diethanolamine, 1-(aminoethylamino)-2,3-dihydroxypropane and ethylenediamine.

8. The carbon dioxide separation composition according to Claim 1, which further contains water, at a concentration of the water of 30 to 75 mass% to the total amount of the carbon dioxide separation composition containing the water.

9. A method for producing the carbon dioxide separation composition as defined in Claim 1, which comprises mixing at least the amine compound (A) represented by the following formula (1) or (2), the amine compound (B) represented by the following formula (3), and gaseous, liquid or solid carbon dioxide, 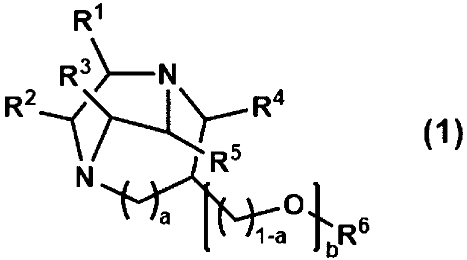 in the above formula, R¹ to R⁶ are each independently a hydrogen atom or a C₁₋₃ alkyl group, and a and b are each independently 0 or 1; 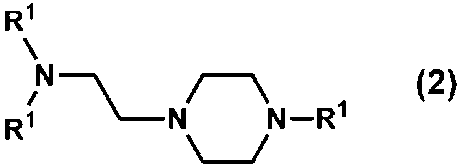 in the above formula, R¹ are each independently a C₁₋₃ alkyl group; 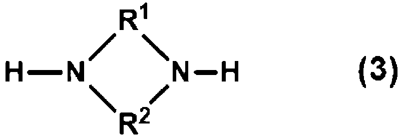 in the above formula, R¹ and R² are each independently a C₂₋₃ alkylene group.
